(19)

Europäisches
Patentamt
European
Patent Office
Office européen
des brevets

(11) **EP 2 408 206 A1**

(12) **EUROPEAN PATENT APPLICATION**

(43) Date of publication:
**18.01.2012 Bulletin 2012/03**

(51) Int Cl.:
*H04N 7/26* (2006.01)   *H04N 7/64* (2006.01)
*H04N 17/00* (2006.01)

(21) Application number: **10007323.8**

(22) Date of filing: **15.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **SwissQual License AG**
**4528 Zuchwil (CH)**

(72) Inventor: **Borer, Silvio**
**2502 Biel (CH)**

(74) Representative: **Fischer, Britta Ruth et al**
**E. BLUM & CO. AG**
**Vorderberg 11**
**8044 Zürich (CH)**

(54) **Method for video quality estimation**

(57)   The invention relates to a method for video quality estimation of a received video signal (105; 208), the method comprising the steps of computing at least one feature value for each frame of the received video signal (105; 208) by comparing each frame of the received video signal (105; 208) with a corresponding frame of the reference video signal (101; 201), the at least one feature value being indicative of a degradation of the respective frame, transforming the computed sequence of the at least one feature values (302; 303) to base degradation values (321; 322) by applying a first monotonically increasing function (305) to the sequence of the at least one feature values (302; 303), transforming the computed sequence of the at least one feature values (302; 303) to transient degradation values (331; 332) by applying a second monotonically increasing function (313; 314) to the sequence of the at least one feature values (302; 303), wherein the second monotonically increasing function (313; 314) is depending on the computed feature values (302; 303) and differs from the first monotonically increasing function (305), converting the base degradation values (321; 322) to base quality values ($q_{base}$) and the transient degradation values (331; 332) to transient quality values ($q_{trans}$), computing a base quality estimate ($Q_{base}$) by aggregating the base quality values ($q_{base}$), computing a transient quality estimate ($Q_{trans}$) by aggregating the transient quality values ($q_{trans}$), and combining the computed base quality estimate ($Q_{base}$) and the computed transient quality estimate ($Q_{trans}$) to compute an overall video quality estimate (s).

Fig. 2

EP 2 408 206 A1

**Description**

The invention relates to a method for video quality estimation according to the preamble of claim 1.

Providers of video services via telecommunication channels and networks typically have an interest in monitoring the quality of the offered video services as perceived by the end user. There is a need for testing, monitoring and/or optimizing the subjectively perceived quality of a received video signal that results from a reference video signal that has been transmitted via a telecommunication network in conjunction with an offered video service. Usually the average subjectively perceived video quality can be estimated by using a model.

A video signal (also called video sequence) typically consists of a sequence of frames. A time stamp is associated with each frame. The difference between the time stamps of two consecutive frames constitute the display time of a frame. The frame rate can be fixed or variable.

Different methods and devices are known for the measuring and estimation of the perceived video quality. The ITU-T (International Telecommunication Union Telecommunication Standardization Sector) recommends in ITU-T Recommendation J.247 "Objective perceptual multimedia video quality measurement in the preference of a full reference", 2008, such methods for the evaluation of multimedia video services. For digital cable communication such a method can be found in ITU-T Recommendation J.144 "Objective perceptual video quality measurement techniques for digital cable television in the presence of a full reference", 2004.

These methods typically align the frames of the reference video signal, i.e. the video signal before compression and transmission, with the frames of the received video signal, i.e. the video signal after compression and transmission to the end user. Values for frame features of the aligned frames of the reference video signal and the received video signal are extracted by comparing the respective signals. The obtained frame feature values are then converted to a quality scale by using linear aggregation. Linear methods are typically easy to implement but may lack modelling accuracy, i.e. they may not account for the impact of different types of degradations caused e.g. by the compression and the transmission on the perceived video quality.

A value of a frame feature is computed for each frame of a received and typically degraded video signal relating data from the frame of the received video signal to data from the corresponding frame of the reference video signal, resulting in a sequence of frame feature values (in the following short: feature values). A frame feature is thus a relative measure and a measure of the degradation. A value of zero for a frame feature typically corresponds to the absence of degradation, whereas a large value for a frame feature corresponds to a large degradation.

Such a frame feature is, for example, given by the so-called blockiness of the received video signal. The blockiness is a measure of the visibility of block borders after encoding and compression with a block-based compression scheme. The blockiness is, for example, derived by computing the average amount of edges in a frame of the received video signal that exceeds the average amount of edges in the corresponding frame of the reference video signal, relative to the average amount of edges in the corresponding frame of the reference video signal.

Another example of a frame feature is given by a difference measure between frames of the received video signal and corresponding frames in the reference video signal (also called: frame difference measure). The difference measure is, for example, derived by computing the average difference of the pixel values in a frame of the received video signal compared with the pixel values of the corresponding frame in the reference video signal. A different difference measure may also be employed such as the difference measure derived by computing the average difference of the pixel values of a frame of received video signal, wherein contrast and brightness have been adjusted, compared with the average pixel values of a corresponding frame of the reference video signal.

A further example of a frame feature is given by a correlation measure that is derived by computing the average correlation of quadratic regions of a frame of the received video signal with corresponding regions of a corresponding frame of the reference video signal.

A yet further example of a frame feature is given by a measure of the so-called jerkiness of the frames of the received video signal.

Different types of degradations can occur in a video signal that has been transmitted over a telecommunication network. These different types of degradation can have different impacts on an end-user's perception of the video signal. In particular, the impact of degradations that occur permanently over a long time period of a video signal is perceptually very different from the impact of so-called transient degradations that only occur during brief intervals of time and then fade away.

Video signals that do not have a strong variation in contents and that are encoded for transmission with encoder settings that are typical in the current state of the art usually show an almost constant degradation over long periods of time due to encoding effects. Such steady-state degradations that are in particular caused by the encoding and possible compression of the reference video signal for its transmission are hereinafter called base degradations.

Transient degradations are usually singular events that are in particular caused by transmission errors occurring during the transmission of the encoded and typically compressed reference video signal over a possibly error-prone telecommunication network.

It is an object of the invention to provide a method for video quality estimation that is more accurate than known methods and that in particular computes a video quality estimate that more accurately describes the video quality as perceived by an end-user.

In order to implement these and still further objects of the invention, which will become more readily apparent as the description proceeds, a method for video quality estimation of a received video signal is provided. The received video signal results from a reference video signal that has been transmitted via a telecommunication network. The received video signal and the reference video signal each comprise a number of frames. According to the method of the invention a value of at least one feature, i.e. at least one feature value, is computed for each frame of the received video signal by comparing each frame of the received video signal with a corresponding frame of the reference video signal, the at least one feature value being indicative of a degradation of the respective frame. This results in a sequence of feature values for at least one feature. Then the computed sequence of the values of the at least one feature is transformed to base degradation values by applying a first monotonically increasing function to the sequence of feature values. Furthermore, the computed sequence of the values of the at least one feature is transformed to transient degradation values by applying a second monotonically increasing function to the sequence of feature values. The second monotonically increasing function depends on the computed feature values and differs from the first monotonically increasing function. The base degradation values and the transient degradation values are converted to base quality values and transient quality values, in particular by subtracting the base degradation values and the transient degradation values from a constant value.

After that a base quality estimate is computed by aggregating the base quality values. Moreover, a transient quality estimate is computed by aggregating the transient quality values. An overall video quality estimate is then computed by combining the computed base quality estimate and the computed transient quality estimate.

The base degradation values are also referred to as base degradation statistic. The transient degradation values are also referred to as transient degradation statistic. The base quality values are also referred to as base quality statistic. The transient quality values are also referred to as transient quality statistic.

The first monotonically increasing function is preferably a parametric function (also referred to as parameterized function), in particular a sigmoid function. The second monotonically increasing function is preferably also a parametric function, in particular a sigmoid function. By employing sigmoid functions an end-user's perception can be emulated. The parameters of the first monotonically increasing function are preferably fixed, whereas the parameters of the second parametric function, for example its inflection point, preferably depend on the computed sequence of feature values.

For the computation of the base quality estimate the base quality values are preferentially aggregated by integrating the base quality values over frame display time, i.e. over the display times of the respective frames. Similarly, for the computation of the transient quality estimate the transient quality values are preferentially aggregated by integrating the transient quality values over frame display time.

For each frame of the received video signal more than one feature value may be computed, i.e. more than one feature may be considered with a feature value being computed for each feature. This results in a sequence of feature values for each considered feature. If more than one feature is considered, base degradation values and transient degradation values - and hence base quality values and transient quality values - are computed for each feature, i.e. for each sequence of feature values. The base quality values are then aggregated to computed overall base degradation values preferably in that the base quality values corresponding to the several sequences of feature values are element-wise multiplied with each other, i.e. the base quality values for different features are multiplied with each other per frame. The overall base quality values are then used to compute the base quality estimate. Similarly, the transient quality values are aggregated to computed overall transient quality values preferably in that the transient quality values corresponding to the several sequences of feature values are element-wise multiplied with each other, i.e. the transient quality values for different features are multiplied with each other per frame. The overall transient quality values are then used to compute the transient quality estimate.

The method of the invention can advantageously be applied to video signals with fixed or variable frame rate and to video signals whose display times are strongly fluctuating in time/duration. The aggregation steps of the method of the invention allow for variable frame rates.

Through the separate consideration of base and transient degradation the method of the invention has the advantage of a high accuracy with respect to the overall video quality estimate, the obtained video quality estimate being close to an end-user's perception.

Further advantageous features and applications of the invention can be found in the dependent claims, as well as in the following description of the drawings illustrating the invention. In the drawings like reference signs designate the same or similar parts throughout the several figures of which:

   Fig. 1 shows a block diagram illustrating the basic steps related to video quality estimation,
   Fig. 2 shows diagrams illustrating the computation of base degradation values and transient degradation values from feature values of a received video signal, and

Fig. 3 shows a block diagram illustrating a possible application of the method of the invention.

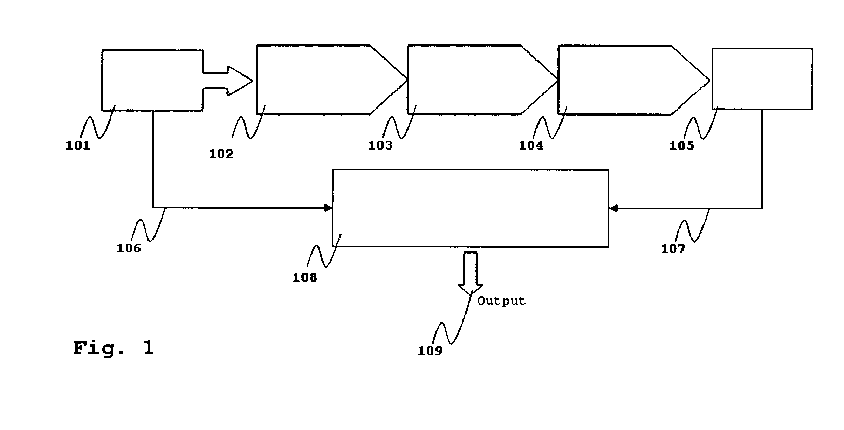

Figure 1 shows schematically the various steps related to the estimation of the quality of a transmitted and received video signal. To save bandwidth, video signals are usually encoded and compressed before the actual transmission over a telecommunication network. A reference video signal 101 is encoded and compressed by means of a usually lossy video encoder 102. Due to the lossiness of the video encoder 102 some information in the reference video signal 101 is lost and hence some degradation is introduced into the video signal, this degradation typically being base degradation as defined in the introductory part of the description.

The encoded and compressed video signal is then transmitted over a telecommunication network 103. The telecommunication network 103 may be error-prone and thus additional degradation may be introduced into the transmitted video signal, this additional degradation typically being transient degradation as defined in the introductory part of the description. Then the transmitted video signal is decoded and displayed by a video decoder and player 104. The video decoder and player 104 may be provided with an error correction and quality enhancement algorithm that may alleviate at least some of the degradation introduced into the transmitted video signal. The output of the video decoder and player 104 constitutes the received video signal 105 which is usually degraded.

The reference video signal 101 and the received video signal 105 form the inputs 106, 107 to a video quality estimation unit 108 that estimates the overall video quality. The overall video quality estimate forms the output 109 of the video quality estimation unit 108. The video quality estimation unit 108 may be realized through hardware and/or software.

Typically, the video encoder 102 and the telecommunication network 105 cause the strongest degradations in the transmitted video signal, with the caused degradations normally being perceptually different. The method of the invention advantageously takes this perceptual difference into account by computing frame feature values and by applying two different transformations to the computed feature values, one transformation being related to base degradations and one transformation being related to transient degradations.

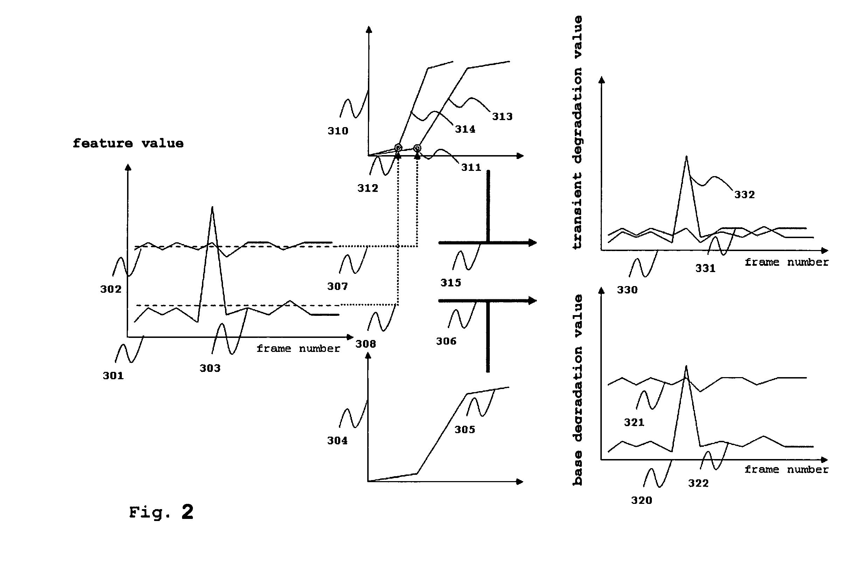

Figure 2 illustrates by various diagrams how exemplary sequences of feature values are transformed into base degradation values and transient degradation values. A feature may for example be the blockiness of a frame of the received video signal or a measure of the jerkiness of a frame of the received video signal. The corresponding feature values can be computed by methods known in the state of the art and as described in the introductory part of the description.

Diagram 301 depicts the computed feature values with respect to the frames, i.e. the corresponding frame numbers. Two sample curves 302 and 303 of feature values are shown, i.e. diagram 301 shows two exemplary sequences of feature values. The mean values of the sample curves 302, 303 are indicated by the corresponding dashed lines. The sample curve 303 has a peak value.

The sequences of feature values given by the curves 302, 303 are transformed to the base degradation values 321, 322 (also called base degradation statistics) depicted in diagram 320 by means of a preferably parametric but fixed transformation defined by the function 305 depicted in diagram 304. The arrow 306 denotes this transformation. The function 305 is preferably a sigmoid function corresponding to a sigmoid transformation. Applying such a sigmoid function 305 to the sequences of feature values 302, 303 results in a compression of the feature values before the first point of curvature change and after the last point of curvature change of the sigmoid function 305. The terms "first" and "last" refer to the chronological occurrence of the points of curvature change. The sigmoid function 305 may be parameterized with respect to the position and slope of its inflection point. The sigmoid function 305 may also be a partial linear function as depicted in diagram 304. The sigmoid transform defined by the sigmoid function 305 maps the sequence of feature values 302, 303 to a scale that better approximates the perception of the end-user, i.e. to a more perceptive scale.

The sequence of feature values 302, 303 is furthermore transformed to the transient degradation values 331, 332 (also called transient degradation statistics) depicted in diagram 330 by means of parametric transformations defined by the functions 313, 314 depicted in diagram 310. The parameters of the transformations and the functions 313, 314, respectively, preferably depend on an average measure of the respective sequence of feature values 302, 303. The arrow 315 denotes these transformations. The functions 313, 314 are preferably sigmoid functions corresponding to sigmoid transformations, including partial linear functions as depicted. The sigmoid functions 313, 314 are preferentially parameterized with respect to the position and slope of their respective inflection point. The position of the inflection point is for example not fixed, but is set equal to a multiple of the mean value of the sequence of feature values 302, 303 the function 313, 314 shall be applied to.

The average measure of the sequence of feature values 302, 303 employed to parameterize the functions 313, 314 is for example given by the average/mean value, the moving average, or an interquantile average (more specifically, for example, an interquartile average) of the respective sequence of feature values 302, 303.

In diagram 310 the functions 313, 314 are exemplarily parameterized in the first point of curvature change 311 and 312, respectively. The mean value of the curve 302 defines the point 311 of the function 313. This is indicated by the dotted arrow 307. Analogously, the mean value of the curve 303 defines the point 312 of the function 314. This is indicated by the dotted arrow 308.

Defining the first points of curvature change 311, 312 in such a way has the advantage that feature values that are close to the respective mean value are transformed to low transient degradation values, whereas the typically few feature values that exceed the respective mean value by far are mapped to large transient degradation values. Accordingly, all feature values of the curve 302 are transformed to low transient degradation values 331, as the curve 302 has no peak values/large outliers. The feature values of the curve 303 are also transformed to low transient degradation values 332 apart from the one large peak value that is transformed to a corresponding large peak value in the curve 332 of the corresponding transient degradation values.

The base degradation values and the transient degradation values can be transformed/converted to a quality scale, i.e. to base quality values and to transient quality values, by subtracting the base degradation values and the transient degradation values, respectively, from a constant value, for example from the value 1. If the respective degradation values lie e.g. in the range of 0 to 1, then transformation/conversion to the quality scale by subtraction from the value 1 results in base/transient quality values q in the range of 0 to 1.

If feature values for more than one feature are computed, e.g. for blockiness and jerkiness, this results in sets of base quality values and sets of transient quality values with a member of each set corresponding to a particular feature. The members of the set of base quality values and of the set of transient quality values are preferably aggregated as follows to form overall base quality values and transient quality values (also referred to for ease of presentation: base/transient quality values). Corresponding elements of the members of the set of base quality values are multiplied with each other to form a sequence of overall base quality values, i.e. an element-wise multiplication is performed in that elements of the members of the set of base quality values that correspond to the same frame number are multiplied with each other.

Analogously, corresponding elements of the members of the set of transient quality values are multiplied with each other to form a sequence of overall transient quality values, i.e. an element-wise multiplication is performed in that elements of the members of the set of transient quality values that correspond to the same frame number are multiplied with each other.

If one of the individual elements of a member of the set of base/transient quality values has a low value then the corresponding element, i.e. the element that corresponds to the same frame number, of the sequence of overall base/transient quality values (also called in short: overall base/transient quality values) has a low value. The overall base/transient quality values are then used to compute the base quality estimate and the transient quality estimate, respectively.

The computed base quality values are preferably aggregated by integrating the base quality values $q_{base}$ over the display times $\Delta t$ of the respective frames followed by a division by the total time duration T of the received video signal to form a base quality estimate $Q_{base}$, the corresponding equation being given by:

$$Q_{base} = \frac{1}{T} \sum_i q_{base}(i) \cdot \Delta t_i$$

with i being an index representing the respective frame number.

Analogously, the transient quality estimate $Q_{trans}$ is preferably computed by the following equation:

$$Q_{trans} = \frac{1}{T} \sum_i q_{trans}(i) \cdot \Delta t_i$$

with $q_{trans}$ being the transient quality values. Computing the base quality estimate and the transient quality estimate in such a way has the advantage that variable frame rate/variable frame display times of the received video signal are taken into account. Preferably, the transient quality values $q_{trans}$ are filtered by a non-linear filter before the integration given by the last equation is performed. Such a non-linear filtering is preferentially performed to account for an observed, typically small perceptual influence of transient degradations occurring in rapid succession compared with the same transient degradations when occurring with a longer time interval between them. A possible non-linear filter employed for transforming the transient quality values $q_{trans}$ to transformed transient quality values $q'_{trans}$ is given by the following equation, under the assumption that the transient quality values $q_{trans}$ are in the range of 0 to 1:

$$q'_{trans}(i)=\min(q_{trans}(i),1-(1-q'_{trans}(i-1))\cdot\exp(-\Delta t_{i-1}/\tau)),$$

with $\tau$ being a pre-defined time constant and i as defined above. With such a non-linear filtering it is achieved that the sequence of transient quality values recovers slowly from low transient quality values. In case a non-linear filtering is applied to the transient quality values, then qtrans(i) should be replaced by q'trans (i) in the above equation for Qtrans.

The overall video quality estimate s is then calculated by aggregating the computed base quality estimate $Q_{base}$, the computed transient quality estimate $Q_{trans}$ and possible additional factors $Q_R$ such as a quality estimate for jerkiness if a measure of jerkiness has not already been taken into account when computing the base/transient degradation values, wherein the aggregation is preferably performed through multiplication such that the overall video quality estimate may be given by the following equation:

$$S = Q_{base}\cdot Q_{trans}\cdot Q_R.$$

The additional factor $Q_R$ could for example comprise a model or model, respectively, an error-correcting behaviour of a video decoder and player used to decode a transmitted video signal, i.e. $Q_R$ could take degradations induced by a video decoder and player into account. The overall video quality estimate preferentially corresponds to a score on a pre-defined video quality scale.

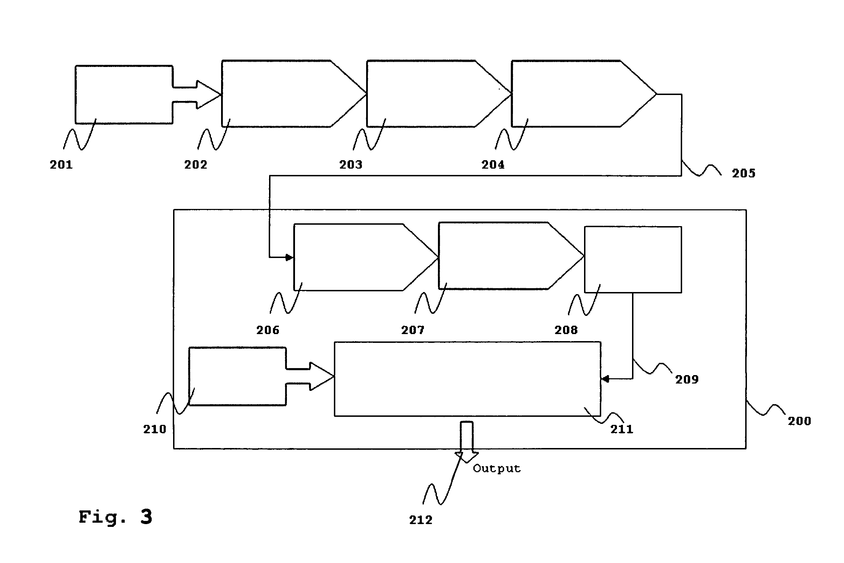

Figure 3 shows a block diagram illustrating a possible application of the method of the invention. A reference video signal 201 is encoded by a video encoder 202, and after that streamed from a streaming server 203 over a telecommunication network 204. A measurement and video quality estimation device 200 is connected via a link 205 with the telecommunication network 204. The measurement and video quality estimation device 200 comprises a video decoding and player unit 206, a video capture unit 207, and a video quality estimation unit 211. The video decoding and player unit 206 decodes and then displays the streamed video signal (also called video stream) that it receives via the link 205. The video capture unit 207 captures the displayed video stream, stores it as received video signal 208 and passes it as input 209 to the video quality estimation unit 211. The video quality estimation unit 211 has as further input a copy 210 of the reference video signal. The video quality estimation unit 211 computes from its inputs 209, 210 the overall video quality estimate according to the method of the invention. The overall video quality estimate constitutes the output of the video quality estimation unit 211 and of the measurement and video quality estimation device 200.

**Claims**

1. A method for video quality estimation of a received video signal (105; 208), the received video signal (105; 208) resulting from a reference video signal (101; 201) that has been transmitted via a telecommunication network (103; 204), wherein the received video signal (105; 208) and the reference video signal (101; 201) each comprise a number of frames, wherein at least one feature value is computed for each frame of the received video signal (105; 208) by comparing each frame of the received video signal (105; 208) with a corresponding frame of the reference video signal (101; 201), the at least one feature value being indicative of a degradation of the respective frame, **characterized by** the following steps:

- transforming the computed sequence of the at least one feature values (302; 303) to base degradation values (321; 322) by applying a first monotonically increasing function (305) to the sequence of the at least one feature values (302; 303),
- transforming the computed sequence of the at least one feature values (302; 303) to transient degradation values (331; 332) by applying a second monotonically increasing function (313; 314) to the sequence of the at least one feature values (302; 303), wherein the second monotonically increasing function (313; 314) depends on the computed feature values (302; 303) and differs from the first monotonically increasing function (305),
- converting the base degradation values (321; 322) to base quality values ($q_{base}$) and the transient degradation values (331; 332) to transient quality values ($q_{trans}$),
- computing a base quality estimate ($Q_{base}$) by aggregating the base quality values ($q_{base}$),
- computing a transient quality estimate ($Q_{trans}$) by aggregating the transient quality values ($q_{trans}$), and
- combining the computed base quality estimate ($Q_{base}$) and the computed transient quality estimate ($Q_{trans}$) to compute an overall video quality estimate (s) .

2. The method according to claim 1, wherein for each frame more than one feature value is computed resulting in several sequences of feature values.

3. The method according to claim 2, wherein the base quality values computed for each sequence of feature values are aggregated, in particular through element-wise multiplication, to form overall base degradation values that are then employed to compute the base quality estimate ($Q_{base}$).

4. The method according to claim 2 or 3, wherein the transient quality values computed for each sequence of feature values are aggregated, in particular through element-wise multiplication, to form overall transient degradation values that are then employed to compute the transient quality estimate ($Q_{trans}$).

5. The method according to one of the preceding claims, wherein the first monotonically increasing function (305) and/or the second monotonically increasing function (313; 314) are parametric functions.

6. The method according to claim 5, wherein the first monotonically increasing function (305) and/or the second monotonically increasing function (313; 314) are sigmoid functions.

7. The method according to claim 5 or 6, wherein the parameters of the second monotonically increasing function (313; 314) depend on the computed sequence of the at least one feature values (302; 303).

8. The method according to claim 7, wherein the parameters of the second monotonically increasing function (313; 314) depend on an average value of the computed sequence of the at least one feature values (302; 303), in particular on a moving average or an interquantile average.

9. The method according to one of the preceding claims, wherein at least one feature value depends on a measure of the jerkiness of the respective frame.

10. The method according to one of the preceding claims, wherein at least one feature value depends on a frame difference measure with respect to corresponding frames of the reference video signal (101; 201) and the received video signal (105; 208).

11. The method according to one of the preceding claims, wherein for the computation of the base quality estimate ($Q_{base}$) the base quality values ($q_{base}$) are aggregated by integrating the base quality values ($q_{base}$) over frame display time (At).

12. The method according to one of the preceding claims, wherein for the computation of the transient quality estimate ($Q_{trans}$) the transient quality values ($q_{trans}$) are aggregated by integrating the transient quality values ($q_{trans}$) over frame display time ($\Delta t$).

13. The method according to claim 12, wherein the transient quality values ($q_{trans}$) are filtered by a non-linear filter before they are aggregated by the integration.

14. The method according to one of the preceding claims, wherein the base quality values ($q_{base}$) and the transient quality values ($q_{trans}$) are computed by subtracting the base degradation values ($q_{base}$) and the transient degradation values ($q_{trans}$) from a constant value.

Fig. 1

# Fig. 2

feature value

301 302 303 304 305 306 307 308

frame number

310 311 312 313 314 315

base degradation value

320 321 322

frame number

transient degradation value

330 331 332

frame number

Fig. 3

Europäisches
Patentamt
European
Patent Office
Office européen
des brevets

**EUROPEAN SEARCH REPORT**

Application Number

EP 10 00 7323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/025400 A1 (SUGIMOTO OSAMU [JP] ET AL) 31 January 2008 (2008-01-31) * abstract * * figure 1 * * paragraph [0029] - paragraph [0043] * | 1-14 | INV. H04N7/26 H04N7/64 H04N17/00 |
| A | S. BORER: "A model of jerkiness for temporal impairments in video transmission", QUALITY OF MULTIMEDIA EXPERIENCE (QOMEX), 2010 SECOND INTERNATIONAL WORKSHOP, 21 June 2010 (2010-06-21), pages 218-223, XP002613215, Trondheim DOI: 10.1109/QOMEX.2010.5516155 * abstract * * Equation 4 * | 11,12 | |
| A | J. KORHONEN, J. YOU: "Improving objective video quality assessment with content analysis", FIFTH INTERNATIONAL WORKSHOP ON VIDEO PROCESSING AND QUALITY METRICS FOR CONSUMER ELECTRONICS, 13 January 2010 (2010-01-13), XP002613225, SCOTTSDALE * the whole document * | 1-14 | TECHNICAL FIELDS SEARCHED (IPC) H04N |

The present search report has been drawn up for all claims

| Place of search | Date of completion of the search | Examiner |
|---|---|---|
| The Hague | 3 January 2011 | Sery, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 00 7323

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2011

| Patent document cited in search report | Publication date | Patent family member(s) | Publication date |
|---|---|---|---|
| US 2008025400 A1 | 31-01-2008 | JP 2008035357 A | 14-02-2008 |

EPO FORM P0459

For more details about this annex : see Official Journal of the European Patent Office, No. 12/82